# EUROPEAN PATENT APPLICATION

(11) **EP 4 488 955 A1**
(43) Date of publication of application: **08.01.2025**
(21) Application number: 23306165.4
(22) Date of filing: 07.07.2023
(51) Int. Cl.: G06V 10/62, G06V 30/18, G06V 30/226, G06V 30/244, G06V 30/24, G06V 30/32

(54) **ESTIMATION OF ORIGINALITY OF A HANDWRITTEN CONTENT**

(71) Applicant: MyScript, 44339 Nantes Cedex 3 (FR)
(72) Inventor: LIOUMBIS, Alexandros, 44339 NANTES (GR)
(74) Representative: RVDB Nantes

(57) **Abstract**

The invention relates to a computer-implemented method and a computing device for analysing a content (CT1) handwritten by a user (UR1). The method comprises: obtaining the handwritten content (CT1), comprising strokes (SK1) of digital ink, and temporal timestamps (TS1) associated with the strokes; extracting handwriting features (FT1) based on the strokes (SK1) and the associated temporal timestamps (TS1); and determining an originality score (SC1) indicating a probability that the handwritten content (CT1) is an original content generated by the user (UR1) or a non-original content copied by the user (UR1), by using the handwriting features (FT1) as input to at least one predictive model (ML1) of a machine learning classifier (12), said at least one predictive model being trained based on first handwritten samples (CT0a) assumed to be originally generated without copying and second handwritten samples (CT0b) assumed to be non-originally generated by copying.

## Description

### Technical field

The present disclosure relates generally to the field of analysing handwriting and concerns in particular computing devices and methods for analysing digital handwriting to estimate its original or non-original character.

### Background

Plagiarism is an ancient practice consisting of one using another person's ideas or work and pretending it is one's own. It can be an unauthorised representation of another's language, thoughts, ideas, or expressions as one's own original work. This practice may be subject to various sanctions depending on the context, such as legal sanctions resulting from copyright infringement or other prejudices. In academia and in industry for instance, plagiarism may be treated as a serious ethical offense or an academic fraud, and may lead to various sanctions such as academic censure, expulsions for students or termination of contracts for professors and researchers.

Plagiarism may take various forms, such as verbatim copy of a single source, interweaving various sources together, paraphrasing, etc, and this without citing the author(s) of the original work(s). In other words, various kinds of copying may lead to plagiarism.

In some cases, an individual may create a content, such as text for instance, by copying or reproducing a content model from an external source (a visual source, an oral source, etc. external to the created content). For instance, during an online exam, a student may rely on an external source to reproduce verbatim what someone else is dictating orally, visually or otherwise. Although this may not qualify as plagiarism as such, it nevertheless poses a problem of lack of originality in the creation process of the content and constitutes a fraud or an improper behaviour that it is desirable to detect and prevent.

The problem of non-original work generated by copying, in particular in the case of text content, has reached an unprecedent level over the recent years due to various factors. Among others, online courses and in academia or other contexts (such as massive online open courses, also named "MOOC") have become very popular over the last few years, and rendered even more difficult for instructors and teachers to detect whether any students have plagiarized or reproduced any content for their homework or assignments. Detecting whether a student has made an original content, i.e. without copying or reproducing an external source, is a complex, fastidious and time-consuming process which may lead to errors and uncertainty. Due to the possible sanctions to which an alleged author of plagiarism may be subject, a certain level of reliability is required in the detection process.

Another factor lies in the recent deployment of technologies that are readily available to the public and can be used to reproduce a content in a non-original manner. The above-discussed problems have significantly escalated with the development of artificial intelligence (AI) techniques and the massive deployment of AI tools (also called generative AI), such as chatbots and the like, which are more and more used by students and professionals. Machine learning models are now capable of automatically generating various contents, such as text, with a sufficiently original character to potentially elude detection of plagiarism. Additionally, even if an Al-content does not qualify as plagiarism as such (as it may be sufficiently different from any content generated by another individual), the use of AI tools in certain contexts, such as for academic assignments or exams, may be undesirable as this may impede students in their learning process or may prevent an institution (Universities, schools, companies, etc.) to evaluate the skills and knowledge of individuals.

AI content detectors and plagiarism detectors already exist but they are not always satisfactory in terms or accuracy and reliability. For instance, users may attempt to alter one or more external sources to avoid plagiarism detection (e.g. by synonym swap, replacing words in a sentence that does not alter the meaning of the sentence, etc.). Users may also alter Al-generated content or employ other techniques in an attempt to elude AI content detection.

Further, there have been difficulties to train machine learning models of AI systems since the performances of these models depend on the quality of the data used for training. To achieve high performances, those machine learning models are usually trained based on content supposed to be humanly generated.

However, as more and more people use AI tools to produce and publish content, Al-generated contents become ubiquitous and tend to proliferate, for instance on the Internet. As a result, there is an increasing risk that machine learning models are trained with Al-generated content mistakenly assumed to be human-generated. Training AI models with Al-generated content may lead to poor performances and low reliability of these models. Learning from data produced by other models may indeed lead to a phenomenon known as "model collapse", namely a degenerative process whereby, over time, models forget original training data from which they initially learned. The more an AI model is exposed to Al-generated data during training, the worse it may potentially perform over time, producing more errors in the responses and content it generates, and producing less variety in its responses. This problematic phenomenon has been discussed for instance in the paper entitled *"The Curse of Recursion: Training on Generated Data Makes Models Forget"* (Ilia Shumailov et al, Cornell University, 27 May 2023).

### Summary of the invention

An object of the present invention is to solve at least one of the disadvantages or deficiencies of the technological background.

Another object of the present invention is to achieve an accurate, reliable and quick estimation of originality of a content handwritten by a user (e.g. handwritten text or any handwritten symbols), that is, to estimate whether the handwritten content is an original content generated by the user without copying or a non-original content copied by the user.

The examples of the present invention that are described herein below provide computing devices, methods and corresponding computer programs for analysing content handwritten by a user.

According to a first aspect, the invention provides a computer-implemented method for analysing a content handwritten by a user, comprising:
- obtaining the handwritten content, comprising strokes of digital ink, and temporal timestamps associated with said strokes;
- extracting handwriting features based on the strokes and the associated temporal timestamps; and
- determining an originality score indicating a probability that the handwritten content is an original content generated by the user or a non-original content copied by the user, by using the handwriting features as input to at least one predictive model of a machine learning classifier, said at least one predictive model being trained based on first handwritten samples assumed to be originally generated without copying and second handwritten samples assumed to be non-originally generated by copying.

In a particular embodiment, the handwritten content comprises handwritten text, and wherein the first and second handwritten samples comprise handwritten text.

In a particular embodiment, said obtaining the handwritten text content and the temporal timestamps comprises at least one of:
- detecting input of said handwritten content over time using an input surface and generating the temporal timestamps based on said detecting; and
- retrieving from a data record the handwritten content and the temporal timestamps.

In a particular embodiment, the timestamps define an input time at which the respective strokes were input.

In a particular embodiment, the extracted handwriting features define a handwriting process according to which the strokes were handwritten by the user over space and time within an input area.

In a particular embodiment, the extracted handwriting features comprises at least one of the following temporal features indicative of a temporal distribution of the handwritten content:
- a speed indicator representative of a speed of handwriting the strokes during the handwriting process;
- a pause indicator representative of pauses made during the handwriting process; and
- a rhythm indicator representative of a rhythm of handwriting the strokes during the handwriting process.

In a particular embodiment, the extracted handwriting features comprise temporal features defining a trajectory along which the strokes were successively handwritten by the user within the input area.

In a particular embodiment, the method comprises classifying, based on the originality score, the handwritten content as an original content generated by the user or a non-original content copied by the user.

In a particular embodiment, the method comprises:
training said at least one predictive model based on the first samples assumed to be originally generated without copying and the second samples assumed to be non-originally generated by copying.

In a particular embodiment, said determining the originality score comprises:
- determining a first originality score indicative of a probability that the handwritten content is an original content generated by the user, by using as input the handwriting features to a first predictive model of a first machine learning classifier, said first predictive model being trained based on said first handwritten samples; and
- determining a second originality score indicative of a probability that the handwritten content is a non-original content copied by the user, by using as input the handwriting features to a second predictive model of a second machine learning classifier, said second predictive model being trained based on said second handwritten samples;
wherein the method comprises classifying the handwritten content as an original content generated by the user or a non-original content copied by the user based on the first and second originality scores.

In a particular embodiment, said classifying the handwritten text content comprises:
- comparing respectively the first and second probability scores with first and second reference values;
- classifying the handwritten content as an original content if the first probability score meets a first condition with respect to the first reference value and if the second probability score meets a second condition with respect to the second reference value.

In a particular embodiment, said classifying comprises:
- if at least one of the first and second condition is not met, recognizing that at least part of the handwritten content is a non-original content.

In a particular embodiment, the method comprises:
- training the first predictive model based on the first handwritten samples assumed to be originally generated without copying; and
- training the second predictive model based on the second handwritten samples assumed to be non-originally generated by copying.

According to a second aspect, the present invention relates to a computer readable program code (or computer program) including instructions for executing the steps of the method of the first aspect of the invention.

The different steps of the method of the first aspect may thus be defined by computer program instructions of a computer program. This computer program may be capable of being implemented in a computing device as defined hereafter, or more generally in a computer, this computer program comprising instructions adapted to the implementation of the steps of a method of the first aspect of the invention.

The computer program of the invention can be expressed in any programming language, and can be in the form of source code, object code, or any intermediary code between source code and object code, such that in a partially-compiled form, for instance, or in any other appropriate form.

According to a third aspect, the present invention relates to a non-transitory computer readable medium (or recording medium) having recorded thereon a computer readable program code (or computer program) of the second aspect of the invention.

In a particular embodiment, the invention relates to a non-transitory computer readable medium having a computer readable program code embodied therein, said computer readable program code being adapted to be executed to implement the method of the first aspect on a computing device, this computing device comprising a processor for executing the steps of said method.

The non-transitory computer readable medium previously mentioned can be any entity or device capable of storing the computer program. For example, the recording medium can comprise a storing means, such as a ROM memory (a CD-ROM or a ROM implemented in a microelectronic circuit), or a magnetic storing means such as a floppy disk or a hard disk for instance.

The non-transitory computer readable medium of the invention can correspond to a transmittable medium, such as an electrical or an optical signal, which can be conveyed via an electric or an optic cable, or by radio or any other appropriate means. The computer program according to the disclosure can in particular be downloaded from the Internet or a network of the like.

Alternatively, the non-transitory computer readable medium can correspond to an integrated circuit in which a computer program is loaded, the circuit being adapted to execute or to be used in the execution of the methods of the invention.

According to a fourth aspect, the invention relates to a computing device configured to implement the method according to the first aspect of the invention. More particularly, the present invention provides a computing device for analysing content handwritten by a user, said device comprising:
- an obtaining module for obtaining the handwritten content, comprising strokes of digital ink, and temporal timestamps associated with said strokes;
- an extracting module for extracting handwriting features based on the strokes and the associated temporal timestamps; and
a determining module for determining an originality score indicating a probability that the handwritten content is an original content generated by the user or a non-original content copied by the user, by using the handwriting features as input to at least one predictive model of a machine learning classifier, said at least one predictive model being trained based on first handwritten samples assumed to be originally generated without copying and second handwritten samples assumed to be non-originally generated by copying.

According to a particular embodiment, the invention relates to a computing device comprising:
a processor; and
a non-transitory computer memory storing instructions that when executed by the processor cause the processor to perform operations comprising:
   - obtaining the handwritten content, comprising strokes of digital ink, and temporal timestamps associated with said strokes;
   - extracting handwriting features based on the strokes and the associated temporal timestamps; and
   - determining an originality score indicating a probability that the handwritten content is an original content generated by the user or a non-original content copied by the user, by using the handwriting features as input to at least one predictive model of a machine learning classifier, said at least one predictive model being trained based on first handwritten samples assumed to be originally generated without copying and second handwritten samples assumed to be non-originally generated by copying.

The various embodiments defined above in connection with the method of the first aspect of the present invention apply in an analogous manner to the computing device, the computer program and the non-transitory computer readable medium of the present invention.

For each step of the method of the present invention as defined in the present disclosure, the computing device may comprise a corresponding module (or unit, or means) configured to perform said step.

In a particular embodiment, the invention may be implemented using software and/or hardware components. In this context, the term "module" can refer in this disclosure to a software component, as well as a hardware component or a plurality of software and/or hardware components.

The present invention advantageously allows for an accurate, reliable and quick estimation of originality of a content handwritten by a user (e.g. handwritten text or any handwritten symbols). In particular, it makes possible to estimate whether such a handwritten content is an original content generated by the handwriting user (i.e. the writer) or a non-original content copied by the handwriting user. In other words, it allows detecting whether the handwritten content effectively originates from (was created by) the hand-writer or whether it was merely copied or reproduced by the hand-writer based on an external source. The writer of the handwritten content may indeed not be the one from which really originates the handwritten content.

In particular, the present disclosure advantageously allows to detect whether or not a content, handwritten by a user, has been really generated by the user through a creative human generation process, i.e. whether it is content emanated from the user which has handwritten the content without copying or reproducing an external source. This external source may be of various natures. The user may for instance have reproduced, by handwriting, an AI generated content and/or a content originating from another individual (a humanly generated content model). The present disclosure allows detecting if the analysed handwritten content was non-originally reproduced by the user by copying an external source.

### Brief description of the drawings

Other characteristics and advantages of the present disclosure will appear from the following description made with reference to the accompanying drawings which show embodiments having no limiting character. In the figures:
- figure 1 is an example of a handwritten content comprising strokes of digital ink;
- figure 2 is a block diagram which schematically represents a computing device according to a particular embodiment of the invention;
- figure 3 is a block diagram which schematically represents modules implemented by the computing device of figure 1, according to a particular embodiment of the invention;
- figure 4 schematically represents analysing a handwritten content using a computing device according to a particular embodiment of the invention;
- figure 5 depicts steps of a method for analysing a handwritten content according to a particular embodiment of the invention;
- figure 6 schematically represents a trajectory along which are successfully written strokes of the handwritten content illustrated in figure 1, according to a particular embodiment of the invention;
- figure 7 schematically represents a temporal-x coordinate scatter chart showing the distribution in the direction x over time of the sample points of the handwritten content illustrated in figure 1, according to a particular embodiment of the invention;
- figure 8 schematically represents a temporal-y coordinate scatter chart showing the distribution in the direction y over time of the sample points of the handwritten content illustrated in figure 1, according to a particular embodiment of the invention;
- figure 9 is an example of a handwritten content resulting from editing made in the handwritten content illustrated in figure 1;
- figure 10 is an example of a handwritten content resulting from editing made in the handwritten content illustrated in figure 9;
- figure 11 schematically represents a trajectory along which are successfully written strokes of the handwritten content illustrated in figure 10, according to a particular embodiment of the invention;
- figure 12 schematically represents a temporal-x coordinate scatter chart showing the distribution in the direction x over time of the sample points of the handwritten content illustrated in figure 10, according to a particular embodiment of the invention;
- figure 13 schematically represents a temporal-y coordinate scatter chart showing the distribution in the direction y over time of the sample points of the handwritten content illustrated in figure 10, according to a particular embodiment of the invention;
- figure 14 is an example of a handwritten content comprising strokes of digital ink;
- figure 15 schematically represents a trajectory along which are successfully written strokes of the handwritten content illustrated in figure 14, according to a particular embodiment of the invention;
- figure 16 schematically represents a temporal-x coordinate scatter chart showing the distribution in the direction x over time of the sample points of the handwritten content illustrated in figure 14, according to a particular embodiment of the invention;
- figure 17 schematically represents a temporal-y coordinate scatter chart showing the distribution in the direction y over time of the sample points of the handwritten content illustrated in figure 14, according to a particular embodiment of the invention;
- figure 18 is a graph illustrating the evolution of the temporal irregularity as a function of the spatial irregularity for different handwritten contents, according to a particular embodiment of the invention;
- figure 19 schematically represents training a predictive model of a machine learning classifier, according to a particular embodiment of the invention;
- figure 20 schematically represents analysing a handwritten content using a computing device with two predictive models, according to a particular embodiment of the invention;
- figure 21 depicts steps of a method for analysing a handwritten content according to a particular embodiment of the invention; and
- figure 22 schematically represents training predictive models of machine learning classifiers according to a particular embodiment of the invention.

The components in the figures are not necessarily to scale, emphasis instead being placed upon illustrating the principles of the present invention.

For simplicity and clarity of illustration, the same reference signs will be used throughout the figures to refer to the same or analogous parts, unless indicated otherwise.

### Description of particular embodiments of the invention

In the following detailed description, numerous specific details are set forth by way of examples in order to provide a thorough understanding of the relevant teachings. However, it should be apparent to those skilled in the art that the present teachings may be practiced without such details. In other instances, well known method, procedures, and/or components are described at a relatively high-level, without detail, in order to avoid unnecessarily obscuring aspects of the present teachings.

The following description of the exemplary embodiments refers to the accompanying drawings. The following detailed description does not limit the invention. Instead, the scope of the invention is defined by the appended claims. In various embodiments as illustrated in the figures, a computing device, a corresponding method and a corresponding computer program are discussed.

The terms "first(s)" (or first(s)), "second(s)", etc.) are used in this document by arbitrary convention to help identify and distinguish between different elements (such as operations, threshold values, etc.) implemented in the embodiments described below.

The terms "hand-drawing" and "handwriting" (and similarly the terms "hand-drawn" and "handwritten") are used interchangeably herein to define the creating of digital contents (handwriting input) by a user through use of his/her hands (or fingers) or any input device (hand-held stylus or digital pen, mouse...) on or with an input surface. The term "hand" or the like is used herein to provide concise description of the input techniques, however the use of other parts of a user's body for similar input is included in this definition, such as foot, mouth and eye.

Handwriting, or a handwritten content, are formed by strokes of digital ink input by a user who is also named the writer. A stroke (also called ink stroke or ink segment) is characterised by at least a stroke initiation location (corresponding to a "pen down" event), a stroke terminal location (corresponding to a "pen up" event), and the stroke path connecting the stroke initiation and the stroke terminal locations.

A handwritten content in the present disclosure is understood as comprising one or multiple symbols (or characters) created by a user through a process of handwriting. A handwritten content may comprise text content and/or mathematical content for instance, or more generally any handwritten symbols.

The term "text" in the present disclosure is understood as encompassing all characters and the like (e.g. alphanumeric characters), and strings thereof, in any written language and, more generally, any symbols used in written text. Text thus includes for instance base characters and accents from any script, such as Latin scripts, Cyrillic scripts, Chinese scripts, and so on. Text may comprise one or a plurality of such symbols, and may be arranged in various manner such as in text lines, paragraph of multiple text lines, etc.

The term "mathematical" content in the present disclosure is understood as encompassing one or multiple mathematical symbols of any sort.

Furthermore, the examples described below and shown in the drawings are in a left-to-right written language context, bearing in mind that any reference to positions can be adapted for written languages having different directional formats.

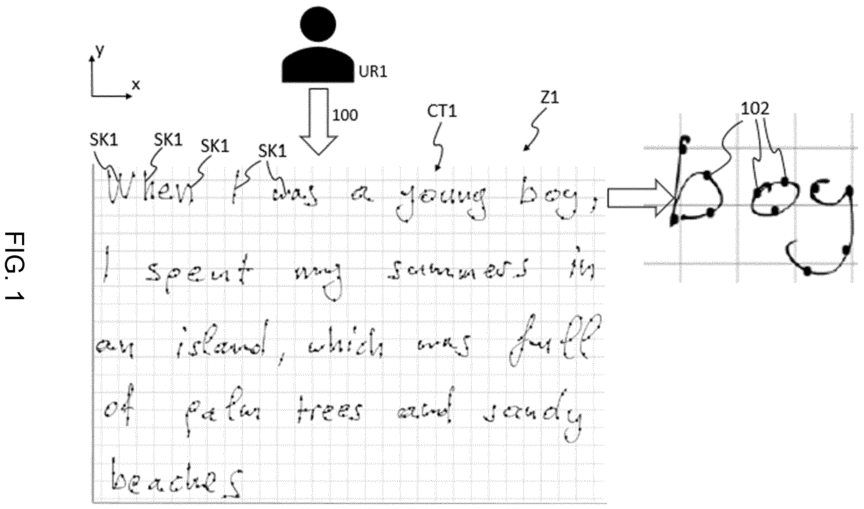

**Figure 1** depicts an example of a content CT1 handwritten by a user UR1 in an input area Z1 through a handwriting process noted 100. The handwritten content CT1, also named handwriting or digital handwriting, comprises strokes SK1 of digital ink. In the present example, the digital strokes SK1form a plurality of text symbols. The handwritten content CT1 is thus a text content. A handwritten content CT1 may however be of various natures, such as a mathematical content, music content, etc. or any symbols or characters that may be formed by a user by handwriting. The handwritten content CT1 may also be a mix of various types of handwritten symbols, such as among the ones mentioned above.

Each stroke SK1 may form a full character, part of a character, or a plurality of characters. For instance, the point at the top of each character "i" constitutes a stroke on its own. For instance, the full word "my" is formed by a single stroke SK1 while the word "when" is formed by 4 distinct strokes as illustrated in figure 1.

The handwritten content CT1 may be spatially arranged in various ways depending on each case. By way of an example, the handwritten content CT1 shown in figure 1 are arranged in words and lines, although other arrangements are possible.

Because the user UR1 is the one who creates (writes) the content CT1 by handwriting, he/she qualifies as the writer of this content. However, this handwritten content CT1 may not originate as such from the user UR1 in the sense that the user UR1 may have non-originally reproduced the handwritten content CT1 by copying an external source. An object of the disclosure is to estimate whether it is the case or not, as described below in particular embodiments.

The present invention provides a computer-implemented method for analysing a content handwritten by a user, such as the handwritten content CT1 of figure 1 for instance. The method may comprise:
- obtaining the handwritten content, comprising strokes of digital ink, and temporal timestamps associated with said strokes;
- extracting handwriting features based on the strokes and the associated temporal timestamps; and
- determining an originality score indicating a probability that the handwritten content is an original content generated by the user or a non-original content copied by the user, by using the handwriting features as input to at least one predictive model of a machine learning classifier, said at least one predictive model being trained based on first handwritten samples assumed to be originally generated without copying and second handwritten samples assumed to be non-originally generated by copying.

Other aspects and advantages of the present invention will be apparent from the embodiments described below with reference to the drawings mentioned above.

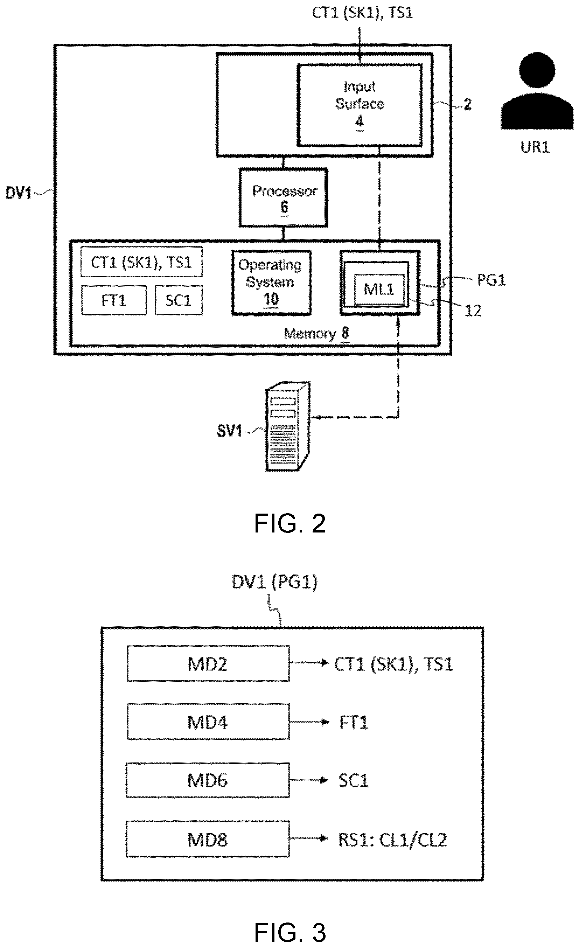

**Figure 2** depicts a computing device DV1 configured to analyse handwritten content according to particular embodiments. In the following, it is assumed that the computing device DV1 is used to analyse the handwritten content CT1, although other handwritten contents may of course be analysed in an analogous manner.

The computing device (or processing device) DV1 may be a computer desktop, laptop computer, tablet computer, e-book reader, mobile phone, smartphone, wearable computer, digital watch, interactive whiteboard, global positioning system (GPS) unit, enterprise digital assistant (EDA), personal digital assistant (PDA), game console, or more generally any processing unit suitable to analyse handwritten content according to the method of the invention. The computing device DV1 may include components of at least one processing elements, some form of memory and input and output (I/O) devices. The components communicate with each other through inputs and outputs, such as connectors, lines, buses, links networks, or others known to the skilled person.

More specifically, the computing device DV1 may comprise an input surface 4 for handwriting a content such as CT1. The input surface 4 is suitable to detect a plurality of strokes SK1 of digital ink entered on (or using) said input surface by a user UR1. Embodiments without such an input surface 4 are however also possible.

The input surface 4 may employ any appropriate technology such as resistive, surface acoustic wave, capacitive, infrared grid, infrared acrylic projection, optical imaging, dispersive signal technology, acoustic pulse recognition, or any other appropriate technology as known to the skilled person to receive user input in the form of a touch- or proximity-sensitive surface. The input surface 4 may be a non-touch sensitive surface which is monitored by a position detection system.

The computing device DV1 may comprises at least one display unit (or display device) 2 for outputting data from the computing device DV1 such as handwriting CT1. The display unit 2 may be a screen or the like of any appropriate technology (LCD, plasma...). The display unit 2 is suitable to display strokes SK1 of digital ink input by a user UR1. Embodiments without such a display unit 2 are however also possible.

The input surface 4 may be co-located with the display unit 2 or remotely connected thereto. In a particular example, the display unit 2 and the input surface 4 are parts of a touchscreen.

As depicted in figure 2, the computing device DV1 comprises a processor 6 and a memory 8. The computing device DV1 may also comprise one or more volatile storing elements (RAM) as part of the memory 8 or separate thereof.

The processor 6 is a hardware device for executing software, particularly software stored in the memory 8. The processor 8 can be any custom made or general purpose processor, a central processing unit (CPU), a semiconductor based microprocessor (in the form of microchip or chipset), a microcontroller, a digital signal processor (DSP), an application specific integrated circuit (ASIC), field programmable gate array (FPGA) or other programmable logic device, or any combination thereof, and more generally any appropriate processor component designed for executing software instructions as known to the skilled person.

The memory 8 is a non-transitory (or non-volatile) computer readable medium (or recording medium) in accordance with a particular embodiment of the invention. The memory 8 may include any combination of non-volatile storing elements (e.g. ROM, EPROM, flash PROM, EEPROM, hard drive, magnetic or optical tape, memory registers, CD-ROM, WORM, DVD, or the like).

The memory 8 may be remote from the computing device DV1, such as at a server or cloud-based system, which is remotely accessible by the computing device DV1. The non-volatile memory 8 is coupled to the processor 6, so that the processor 6 is capable of reading information from and writing information to the memory 8. As an alternative, the memory 8 is integral to the computing device DV1.

The memory 8 includes an operating system (OS) 10 and a computer program (or application) PG1. The operating system 10 controls the execution of the computer program PG1. This computer program (or computer-readable program code) PG1 comprises instructions to implement a method according to particular embodiments of the invention.

The non-volatile memory 8 thus constitutes a recording medium (or information medium) according to particular embodiments of the present invention, having stored thereon the computer program PG1.

As described later in particular examples, the computer program PG1 may define at least one predictive model ML1 of a machine learning (ML) classifier 12. In a particular example, the computer program PG1 comprises a predictive model ML1 executable by a ML classifier 12. In a particular example, the computer program PG1 comprises two predictive models ML1 executable by two respective ML classifiers 12. Each ML classifier 12 is configured to perform an estimation (or prediction) based respectively on a trained predictive model ML1, as further described below.

A ML classifier 12 in the present embodiment may comprise an artificial neural network configured according to a trained predictive model ML1 to produce an estimation result based on an input.

In particular example, the computer program PG1 comprises instructions for analysing the digital content CT1 handwritten by the user UR1. To this end, the computing device DV1 is configured to obtain the handwritten content CT1, comprising strokes SK1 of digital ink, and temporal timestamps (or temporal information) TS1 associated with these strokes SK1. These timestamps temporal TS1 define temporal information related to the strokes SK1 of the handwritten content CT1.

More specifically, the temporal timestamps TS1 may define a respective time at which (or a chronologic order according to which) each stroke SK1 or sampled points of a stroke were made or input by the user UR1.

In a particular example, the strokes SK1 comprises ink points and each ink point is associated with a temporal stamp TS1.

The computing device DV1 may be configured to obtain the handwritten content CT1 and the temporal timestamps TS1 in any appropriate manner. The handwritten content CT1 may comprise the temporal timestamps TS1. In an example, the handwritten content CT1 and the temporal timestamps TS1 are separate sets of data obtained by the computing device DV1.

In a particular example, the computing device DV1 is configured to detect input of the handwritten content CT1 over time using the input surface 2 and to generate the temporal timestamps TS1 based on this detection. The computing device DV1 may for instance detect each pen-down and pen-up event on the input surface 4 and deduce therefrom one or plural temporal timestamps associated with each digital stroke SK1 entered by the user UR1 through sampling of points of the strokes.

In a particular example, the computing device DV1 is configured to retrieve from a data record (e.g. from memory 8 or from a database) the handwritten content CT1 and the temporal timestamps TS1.

The computing device DV1 is configured to process the handwritten content CT1 and the associated temporal timestamps TS1 to extract therefrom handwriting features FT1 (figure 2) and to estimate, based on these extracted handwriting features FT1, whether the handwritten content CT1 is an original content generated by the user UR1 or a non-original content copied by the user UR1.

As shown in **figure 3** according to a particular embodiment, when running the computer program PG1 stored in the memory 8 (figure 2), the processor 6 may implement modules, namely: an obtaining module MD2, an extracting module MD4, a determining module MD6, and possibly also a classifying module MD8.

The obtaining module MD2 may be configured to obtain a handwritten content CT1, comprising strokes SK1 of digital ink, and temporal timestamps TS1 associated with the strokes SK1.

The extracting module MD4 may be configured to extract handwriting features FT1 based on the strokes SK1 and the associated temporal timestamps TS1.

The determining module MD6 may be configured to determine an originality score SC1 indicating a probability that the handwritten content CT1 is an original content generated by the user UR1 or a non-original content copied by the user UR1, by using the handwriting features FT1 as input to the one or more predictive models ML1 of the machine learning classifier(s) 12. As described further below, these one or more predictive models are trained based on first handwritten samples assumed to be originally generated without copying and second handwritten samples assumed to be non-originally generated by copying.

The classifying module MD8 may be configured to classify, based on the originality score SC1, the handwritten content CT1 as an original content generated by the user UR1 or a non-original content copied by the user UR1.

The computer program PG1 comprises instructions configuring the processor 6 to implement the above-mentioned modules MD2-MD6, and possibly MD8, in order to perform steps of an analysing method of the invention, as described later in particular embodiments.

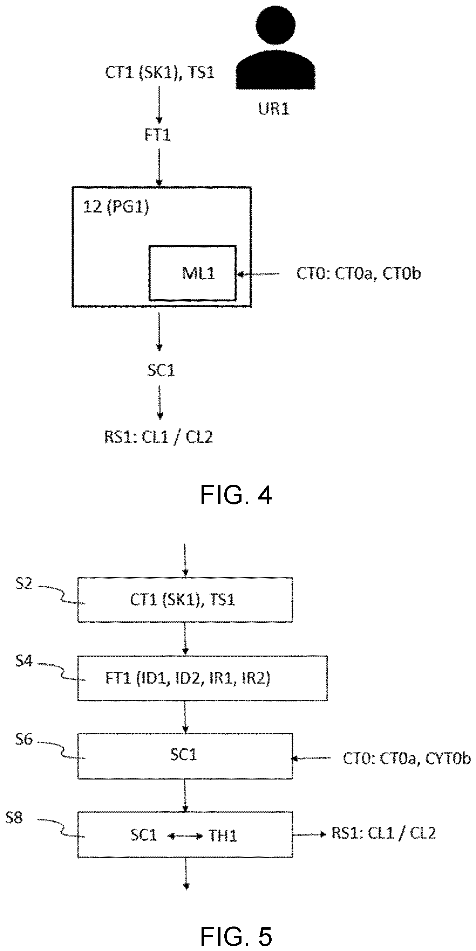

The configuration and operation of the modules MD2-MD8 of the computing device DV1 will be more apparent in the particular embodiments described hereinbelow with reference to the **figures 4-5****.** It is to be understood that the modules MD2-MD8 as shown in figure 3 represent only an example embodiment of the present invention, other implementations being possible.

For each step of the method of the present invention, the computing device DV1 may comprise a corresponding module configured to perform said step.

A method implemented by the computing device DV1 illustrated in **figures 2-3** is now described with reference to **figures 4-5****,** in accordance with particular embodiments of the present invention. More specifically, the computing device DV1 implements this method by executing the computer program PG1 stored in the memory 8.

In an obtaining step S2 (figure 5), the computing device DV1 obtains a content handwritten by a user UR1 (or assumed to be handwritten by the user UR1), i.e. the handwritten content CT1 as shown in figure 1 by way of an example. As such, the user thus qualifies as the writer (or hand-writer) of the handwritten content CT1. The user UR1 may create or input the digital handwriting CT1 using the computing device DV1 through the input surface 4 or by any other appropriate means.

The handwritten content CT1 comprises strokes SK1 of digital ink (figure 1). These strokes SK1 constitute a digital representation of the handwriting CT1. In particular, the computing device DV1 may obtain various information defining the strokes SK1, such as spatial information defining the strokes SK1 in space and/or pressure information defining a pressure at which each respective stroke SK1 was input by the user UR1.

The user UR1 is assumed to have created (or generated) the digital content CT1 through a handwriting process 100 (figure 1) over space and time. The handwritten content CT1 has for instance been input by handwriting in an input area Z1. This input area Z1 may be all or part of an electronic document.

The handwritten content CT1 obtained in S2 may comprise in particular coordinates of samples points 102 in space, for instance according to directions x and y in the input area Z1 (figure 1).

As already mentioned, the nature of the handwritten content CT1 may vary depending on each case. It is assumed for illustrative purpose only that the handwritten content CT1 comprises (or is) handwritten text, although other kinds of handwritten content are possible (e.g. mathematical symbols, music symbols, mix of different types of handwritten symbols).

In the obtaining step S2 (figure 5), the computing device DV1 also obtains temporal timestamps (or temporal information) TS1 associated with the strokes SK1 of the handwritten content CT1.

The temporal timestamps TS1 may define information relative to an instant (or time) at which each respective stroke SK1 was made or input by the user UR1. A timestamp TS1 may for instance define a date and time of a respective stroke SK1. In a particular example, each stroke SK1 is associated with a first timestamp TS1 and/or a second timestamp TS1 defining instants at which the input of the stroke SK1 started and/or ended, respectively.

The temporal timestamps TS1 may define information relative to an order (chronologic order) according to which the strokes SK1 were successively input by the user UR1 over time. The temporal timestamps TS1 may for instance take the form of a timely-ordered list of the strokes SK1.

In a particular example, the temporal timestamps TS1 are part of the handwritten content CT1 acquired by the computing device DV1. In another example, the handwritten content CT1 and the temporal timestamps TS1 are distinct sets of data. These data sets may be obtained (S2) together or separately by the computing device DV1.

In a particular example, the computing device DV1 detects (S2) handwriting input of said handwritten content over time using the input surface 4 and generates (S2) the temporal timestamps TS1 based on this detection.

The plurality of strokes ST of digital ink may be input by the user UR1 in an electronic document Z1 using the input surface 4 of the computing device DV1. The user UR1 may enter each input stroke SK1 with a hand or finger, or with any appropriate input instrument such as a digital pen or stylus suitable for use with the input surface 4. The user UR1 may also enter an input stroke SK1 by making a gesture above the input surface 4 in case means configured to sense motions in the vicinity of the input surface 4 is being used, or with a peripheral device of the computing device DV1, such as a mouse or a joystick or the like.

In a particular example, the computing device DV1 retrieves (S2) from a data record the handwritten content CT1 and the temporal timestamps TS1. To this end, the computing device DV1 may for instance access a database storing the data record. This data record may be stored in memory 8 or in a memory external to the computing device DV1.

The computing device DV1 may display (S2) the acquired strokes ST on the display 2, although implementations without such a display are also possible.

In an extracting step S4 (figure 5), the computing device DV1 extracts (or determines) handwriting features FT1 based on the strokes SK1 and the associated temporal timestamps TS1 previously obtained in step S2.

The handwriting features FT1 extracted in step S4 may be of various natures. Generally, the extracted handwriting features FT1 may define a handwriting process 100 (figure 1) according to which the digital strokes SK1 were handwritten by the user UR1 over space and time within an input area Z1. In other words, these extracted handwriting features FT1 defines how the user hand-wrote the content CT1 over space and time.

The Applicant has observed that the way the user UR1 hand-writes the content CT1 in space and time during the handwriting process 100 is characteristic of a degree of originality of this handwritten content CT1. In particular, it has been observed that a user UR1 handwriting a content CT1 adopts a handwriting process 100 significantly different depending on whether the content CT1 is originally generated by the user UR1 at the time of handwriting without copying or whether it is non-originally reproduced by the user UR1 merely by copying. In other words, whether the human generation process for handwriting the content CT1 is a creative one or a reproductive one affects the handwriting process 100, e.g. the distribution and/or arrangement of the strokes SK1 over space and time.

The present invention thus relies on analysing handwriting features FT1 representative of how the content CT1 was handwritten by the user UR1 over space and time to determine whether the content CT1 was copied or not based on an external source.

The extraction S4 of the handwriting features FT1 will be further described late according to particular examples.

In a determining step S6 (figure 5), the computing device DV1 determines an (or at least one) originality score SC1 indicating a probability that the handwritten content CT1 is an original content generated by the user UR1 or a non-original content copied by the user UR1, by using the handwriting features FT1 as input to at least one predictive model ML1 of a machine learning classifier 12 (figures 2 and 4). In this example, it is assumed that only one predictive model ML1 is used, although other embodiments are possible where a plurality of predictive models ML1 are used as described further below.

The predictive model ML1 is trained based on handwritten samples CT0, that is, based on first handwritten samples CT0a assumed to be originally generated without copying and second handwritten samples CT0b assumed to be non-originally generated by copying (figures 4-5). Both handwritten samples CT0a and CT0b (also called handwritten examples) are assumed to be handwritten by humans.

In a particular example, after completing steps S2-S6, the computing device DV1 performs a classifying step S8 (figure 5) wherein it classifies, based on the originality score SC1 determined in S8, the handwritten content CT1 as an original content generated by the user UR1 at the time of handwriting or a non-original content copied by the user UR1. As a result RS1 of this classifying step S8, the handwritten content CT1 may be recognised as belonging to either a first class CL1, meaning that the handwritten content CT1 is an original content, or to a second class CL2, meaning that the handwritten content CT1 is a non-original content.

In a particular example, the originality score SC1 is compared (S8) with a reference value TH1 (e.g. a threshold). The class CL1/CL2 attributed to the handwritten content CT1 as the result RS1 of the classifying step S8 is thus based on said comparing the originality score SC1 with the reference value TH1. For instance, if the originality score SC1 is determined as exceeding the threshold TH1, then the handwritten content C1 is recognised as belonging to class CL1 (original content).

The present invention advantageously allows for an accurate, reliable and quick estimation of an original character of the content handwritten CT1 by the user UR1. In particular, it makes possible to estimate whether such a handwritten content CT1 is an original content generated by the user UR1 (i.e. the writer) at the time of handwriting or a non-original content copied by the user UR1 from another source. In other words, it allows detecting whether the handwritten content effectively originates from (was created by) the hand-writer UR1 or whether it was merely copied or reproduced by the hand-writer based on an external source. The writer UR1 may indeed not be the one from which really originates the handwritten content CT1.

In particular, the present invention advantageously allows to detect whether or not the content CT1, handwritten by the user UR1, has been really generated by the user UR1 through a creative human generation process, i.e. whether it is the user UR1 which has handwritten the content CT1 without copying or reproducing an external source. This external source may be of various natures. The user UR1 may for instance have reproduced, by handwriting, an AI generated content and/or a content originating from another individual (a humanly generated content model). The present invention thus allows detecting if the analysed handwritten content CT1 was non-originally reproduced by the user UR1 by copying an external source.

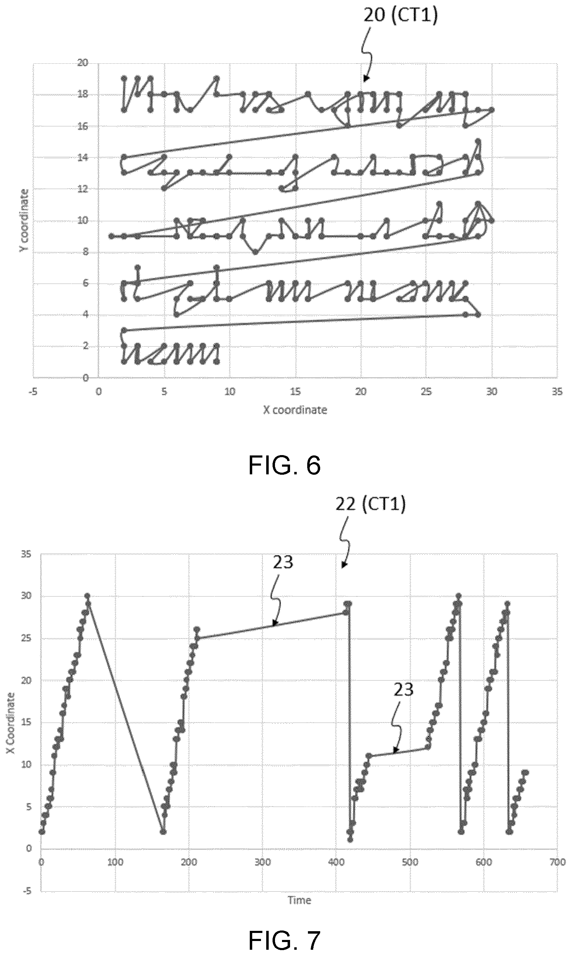

Various embodiments of the method of **figures 4-5** will now be described by way of examples with respect to **figures 6-22****.** To this end, the computing device DV1 may execute the computer program PG1 as shown in figure 2.

As already indicated, in the extracting step S4 (figure 5), the computing device DV1 extracts (or determines) the handwriting features FT1 based on the strokes SK1 and the associated temporal timestamps TS1 previously obtained in step S2.

In a particular example, the extracted handwriting features FT1 may be indicative of a degree of irregularity (or regularity) of the handwriting process 100 according to which was input the handwritten content CT1 by the user UR1 over space and time. In other words, the handwriting features FT1 may be indicative of a degree of disturbance or discontinuity that occurred during handwriting process 100. For instance, the handwriting features FT1 may be indicative of a number of spatial and/or temporal irregularities (or disruptions), of the handwriting process 100 over space and/or time.

In a particular example, the extracted handwriting features FT1 comprises at least one temporal feature ID1 (figure 5) indicative of a temporal distribution (or temporal profile) of the handwritten content CT1. For instance, the extracted handwriting features FT1 may comprise at least one of the following temporal features ID1:
- a speed indicator representative of a speed of handwriting the strokes SK1 (or words) during the handwriting process 100;
- a pause indicator representative of number, duration and/or temporal distribution of pauses made during the handwriting process 100; and
- a rhythm indicator representative of a rhythm, e.g. acceleration and/or deceleration, of handwriting the strokes SK1 during the handwriting process 100.

The extracted handwriting features FT1 may comprise any one of the above temporal indicators, or a mix of at least two of these indicators, or all three of these indicators.

In a particular example shown in **figure 6****,** the handwriting features FT1 determined in step S4 comprise spatial features ID2 (figure 5) defining a trajectory 20 (or spatial pattern) along which the strokes SK1 (or digital ink) were (or was) successively handwritten by the user UR1 within the input area Z1. This trajectory 20 may correspond to a path of the locations of the successive strokes SK1.

As shown in figure 6, this trajectory 20 represents the handwriting process 100 (figure 1) according to which the digital strokes SK1 of the handwritten content CT1 shown in figure 1 were handwritten by the user UR1 in space (according to x and y directions). In the present example, it is assumed that the user UR1 made no correction backward while handwriting the content CT1 in the input area Z1, this being reflected by a low number of intersections and overlaps of the trajectory 20.

A relatively high number of intersections and/or overlaps of the trajectory 20 within the input area Z1 may be indicative of interruptions in the handwriting process 100 where the user UR1 made edits or modifications (e.g. deletions, corrections, additions, format changes, etc.) within the handwritten content CT1. The more the user UR1 went back and forth in the content CT1 during the handwriting process 100 to edit what was already written, the more the trajectory X comprises intersections and/or overlaps indicative of an irregular input pattern over space and time during the handwriting process 100.

Conversely, a relatively low number of intersections and/or overlaps of the trajectory 20 within the input area Z1 may be indicative of a regular input pattern over space and time, i.e. with no or only a few edits (e.g. deletions, corrections, additions, format changes, etc.) within the handwritten content CT1 during the handwriting process 100.

In a particular example shown in **figure 6****,** the handwriting features FT1 determines as spatial features ID2 (figure 5) in step S4 a number of intersections and/or overlaps of the trajectory 20 within the input area Z1.

In a particular example, the computing device DV1 determines (S4, figure 5) a spatial irregularity score (or spatial irregularity indicator) IR1, or a temporal irregularity score (or temporal irregularity indicator) IR2, or both, as extracted handwriting features FT1. In other words, the handwriting features FT1 determined in step S4 may comprise a spatial irregularity score IR1 and/or a temporal irregularity score IR2.

The spatial irregularity score IR1 is representative of a level of irregularity of the spatial distribution of the handwritten content CT1. This spatial irregularity score IR1 defines to what extend the spatial distribution of the content CT1 is irregular (or regular) according to x and/or y directions (figures 1). For instance, the higher spatial irregularity score IR2 is, the more irregular the spatial distribution of the handwritten content CT1 is.

Spatial irregularity is characteristic of a trajectory 20 of the digital ink which is disrupted (i.e. with a relatively high number of intersections and/or overlaps). The spatial irregularity tends to increase for instance when strokes SK1 corresponding to diacritics and/or characters and/or words and/or phrases are edited (e.g. corrected and/or added and/or deleted) after further content has been input during the handwriting process 100, such edits requiring back-and-forth editing actions within the handwritten content CT1.

The temporal irregularity score IR2 is representative of a level of irregularity of the temporal distribution of the handwritten content CT1. This temporal irregularity score IR2 defines to what extend the temporal distribution of the content CT1 is irregular (or regular) according to x and/or y directions (figures 1). For instance, the higher temporal irregularity score IR2 is, the more irregular the temporal distribution of the handwritten content CT1 is.

**Figure 7** is a temporal-x coordinate scatter chart showing the distribution 22 in the direction x over time of the sample points 102 (figure 1) of the handwritten content CT1 of figure 1.

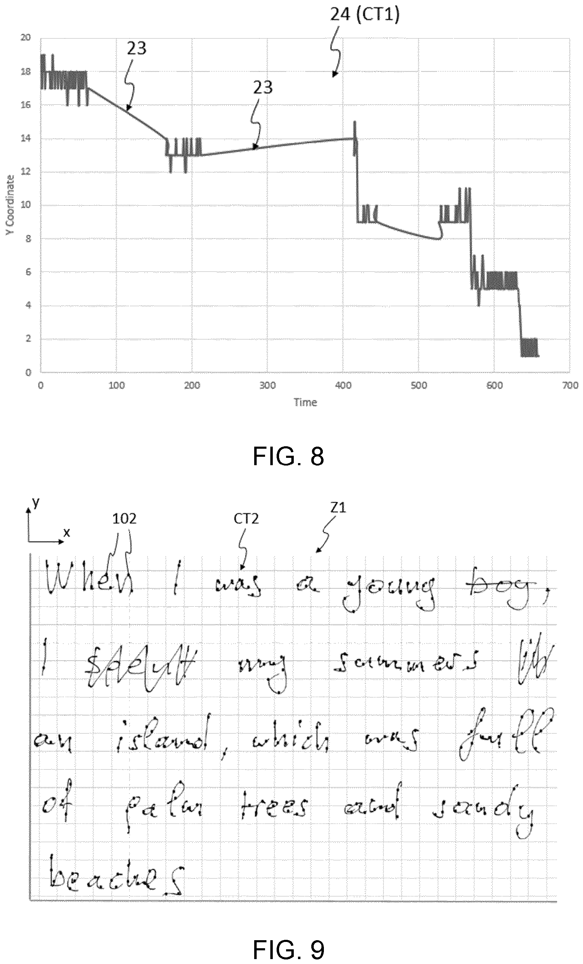

**Figure 8** is a temporal-y coordinate scatter chart showing the distribution 24 in the direction y over time of the sample points 102 (figure 1) of the handwritten content CT1 of figure 1.

As can be seen from the charts of figures 7-8, the temporal distributions 22 and 24 of the samples points 102 along respectively the x and y axis are relatively irregular in the exemplary case of the handwritten content CT1 shown in figure 1. This relatively high level of irregularity in the temporal distribution may result from different factors, such as irregular pauses 23 that were made by the user UR1 between portions of text, varying handwriting speed of words, different pressure in certain parts of the text compared to other parts, etc.

Spatial and temporal distribution scores IR1 and IR2 indicating respectively relatively high spatial and temporal distributions of the handwritten content CT1 are typically characteristic of a content CT1 that was originally generated by the user UR1 without copying, i.e. without reproducing an external source. Indeed, a user generating an original content by handwriting without copying generally makes irregular pauses, adopts an irregular handwriting speed and also makes back-and-forth editing actions within the handwritten content CT1, this resulting from the very random and versatile process of human creation.

Conversely, spatial and temporal distribution scores IR1 and IR2 indicating respectively relatively low spatial and temporal distributions of the handwritten content CT1 are usually characteristic of a non-original content CT1, that is, a content that was reproduced by the user by copying an external source. Indeed, a user reproducing a content by hand-copying an external source generally tends to adopt a rather mechanic or robotic handwriting rhythm (or style) with regular pauses and a relatively low number of back-and-forth editing actions within the handwritten content CT1.

More specifically, while copying a user usually does not need to hesitate or make corrections as would be necessary in a creative human generation process. Editing actions performed all along the handwriting process have a characteristic impact on the handwriting trajectory and lead to a specific spatial pattern that can be used to detect when a handwritten content has been copied. Additionally, copying is a process that usually requires making regular pauses to consult the external source and then reproduce by writing portions of the content. These regular pauses constitute a specific temporal pattern than can be used to detect when a handwritten content has been copied.

**Figure 9** shows an example where the user UR1 makes editing alterations to the handwritten content CT1, e.g. by scratching out some words (i.e. "boy", "spent", and "in"), thereby obtaining an edited content CT2.

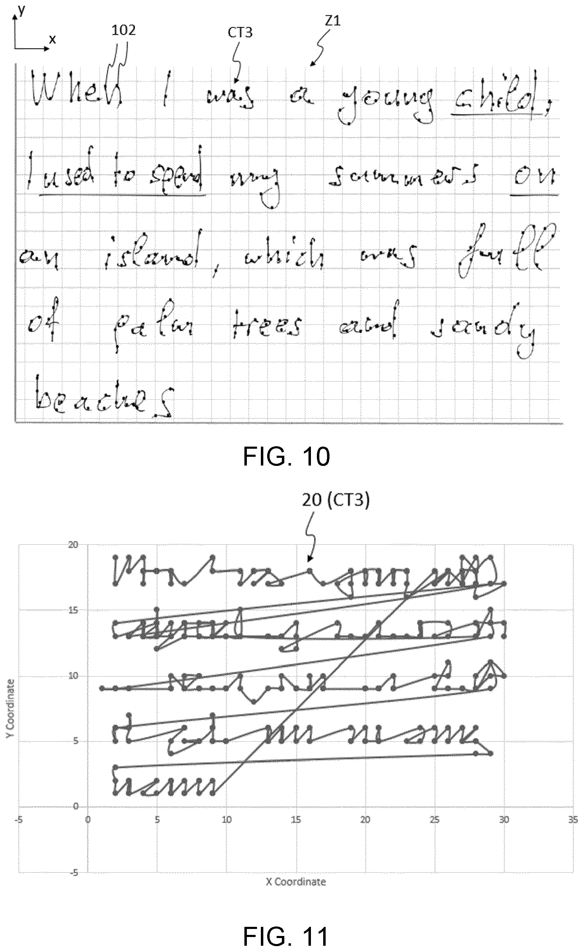

**Figure 10** shows an example where the user UR1 makes further editing alterations to the handwritten content CT2, e.g. by replacing the words scratched out in figure 9 with new words (i.e. "child", "used to spend" and "on"), thereby obtaining an edited content CT3.

As already indicated, editing actions such as deletion, correction, insertion, etc. are characteristic of an original content which is created by handwriting without copying, i.e. without reproducing an external source.

As already indicated, the handwriting features FT1 determined in step S4 may comprise spatial features ID2 (figure 5) defining a trajectory 20 (or spatial pattern) along which the strokes SK1 (or digital ink) were (or was) successively handwritten by the user UR1 within the input area Z1. This trajectory 20 may correspond to a path of the locations of the successive strokes SK1.

**Figure 11** shows in a particular example the trajectory 20 representing the handwriting process 100 according to which the digital strokes SK1 of the edited handwritten content CT3 shown in figure 10 were handwritten by the user UR1 in space (according to x and y directions). As can be seen, the trajectory 20 includes in this case a number of intersections and overlaps caused by the editing alterations made by the user UR1 during the handwriting process. The number of intersections and/or overlaps of the trajectory 20 within the input area Z1 may be determined as spatial features ID2 (figure 5) in step S4. The determined number of intersections and/or overlaps may then be taken into account to determine the original score SC1 (S6, figure 5).

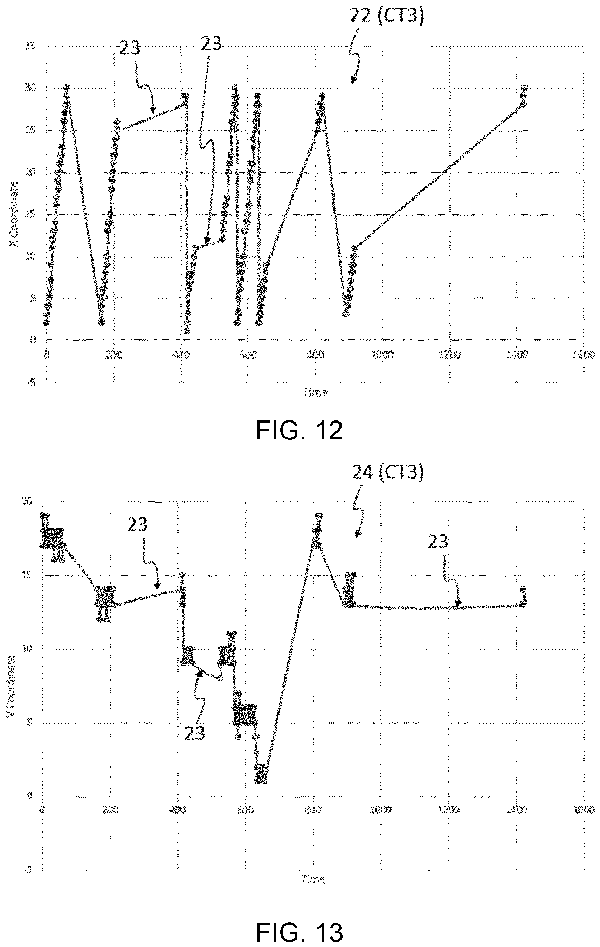

**Figure 12** is a temporal-x coordinate scatter chart showing the distribution 22 in the direction x over time of the sample points 102 (figure 10) of the edited handwritten content CT3 of figure 10.

**Figure 13** is a temporal-y coordinate scatter chart showing the distribution 24 in the direction y over time of the sample points 102 (figure 10) of the edited handwritten content CT3 of figure 10.

As can be seen from the charts of figures 12-13, the temporal distributions 22 and 24 of the samples points 102 along respectively the x and y axis are more irregular in the exemplary case of the edited handwritten content CT3 than in the case of the handwritten content CT1 (figures 7-8). This is reflected for instance by the irregular pauses 23 made by the user UR1 as part of the handwriting process. This higher level of irregularity in the temporal distribution result from the editing alterations made by the user UR1 within the text.

As already indicated, the computing device DV1 may determine in step S4 (figure 5) at least one of (or both) a spatial irregularity score IR1 and a temporal irregularity score IR2 as extracted handwriting features FT1. In other words, the handwriting features FT1 determined in step S4 may comprise a spatial irregularity score IR1 and/or a temporal irregularity score IR2. Based on these irregularity score IR1 and/or IR2, the computing device DV1 may determine the originality score SC1 (step S6, figure 5).

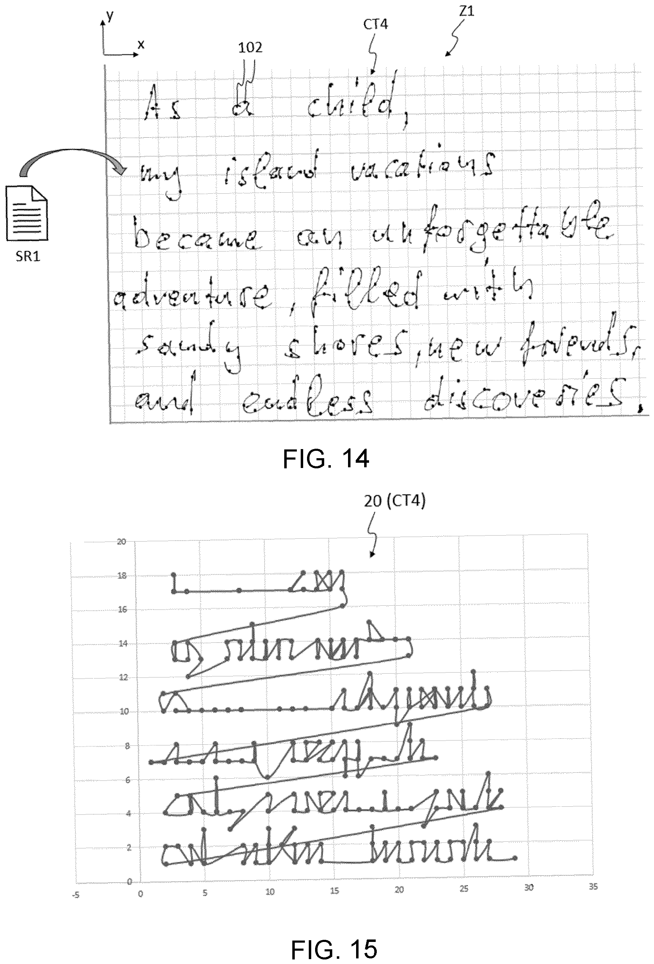

**Figure 14** shows another example of a handwritten content CT4 which is generated by the user UR1, but this time by copying (or reproducing) an external source SR1. This source SR1 on which relies the user UR1 to generate the handwritten content CT4 can be of various natures and may be used in different ways by the user UR1.

The external source SR1 may be an electronic document that is visually accessible to the user UR1 while hand-copying the handwritten content CT4, although other embodiments are possible. More generally, the external source SR1 may be any source of information which is available to the user UR1 as a model or basis for copying, for instance in a visual or audio form. For instance, the user UR1 may hand-copy the source SR1 which is orally dictated to him/her.

The external source SR1 may comprise one or a plurality of sources. The user UR1 may for instance produce the handwritten content CT4 by copying a plurality of sources SR1 combined together. It is assumed by way of an example that the user UR1 relies on a single source SR1 to generate the handwritten content CT4 shown in figure 14.

In a particular example, the external source SR1 on which relies the user UR1 to generate the handwritten content CT4 is an Al generated content, e.g. a content generated by an AI Chatbot. By way of an example, the source SR1 is one or several text contents generated by an AI Chatbot, such as ChatGPT^{®} or the like.

In a particular example, the external source SR1 on which relies the user UR1 to generate the handwritten content CT4 is a humanly generated content, for instance a text document such as a book, a web page, an audio content, etc.

**Figure 15** shows in a particular example the trajectory 20 representing the handwriting process 100 according to which the digital strokes SK1 of the handwritten content CT4 shown in figure 14 were handwritten by the user UR1 in space (according to x and y directions). As can be seen, the trajectory 20 includes in this case a relatively low number of intersections and overlaps made by the user UR1 during the handwriting process. The number of intersections and/or overlaps of the trajectory 20 may be determined as spatial features ID2 (S4, figure 5) and then taken into account to determine the original score SC1 (S6, figure 5).

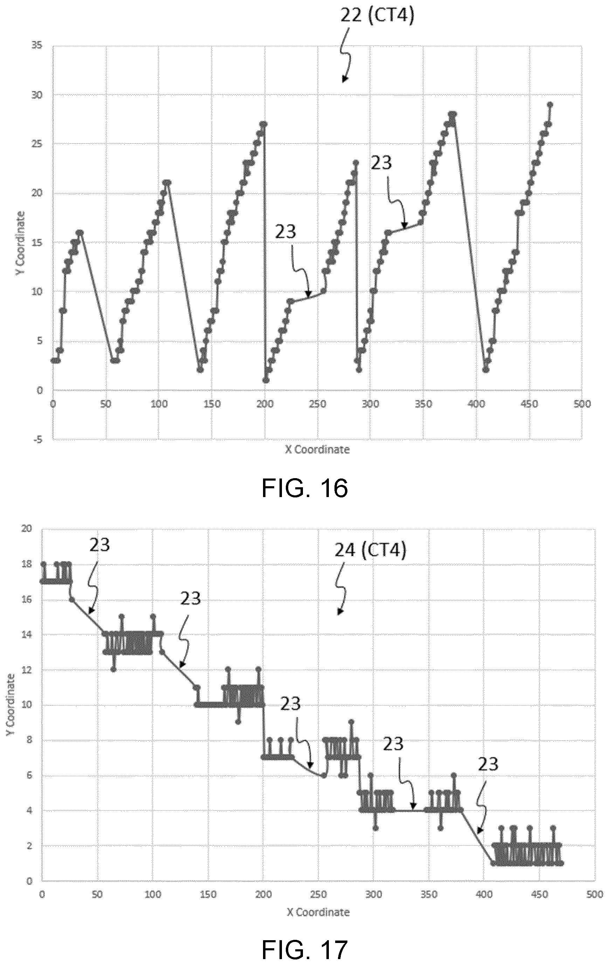

**Figure 16** is a temporal-x coordinate scatter chart showing the distribution 22 in the direction x over time of the sample points 102 (figure 14) of the handwritten content CT4 of figure 14.

**Figure 17** is a temporal-y coordinate scatter chart showing the distribution 24 in the direction y over time of the sample points 102 (figure 14) of the handwritten content CT4 of figure 14.

As can be seen from the charts of figures 16-17, the temporal distributions 22 and 24 of the samples points 102 along respectively the x and y axis are more regular in the exemplary case of the handwritten content CT4 than in the case of the handwritten contents CT1 and CT3 (figures 7-8 and 12-13). This is reflected for instance by the regular pauses 23 made by the user UR1 as part of the handwriting process. This lower level of irregularity in the temporal distribution results from the fact that the handwritten content CT4 was generated by the user copying an external source SR1.

As already indicated, a user reproducing a content by hand-copying an external source generally tends to adopts a rather mechanic or robotic handwriting rhythm (or style) with regular pauses and a relatively low number of back-and-forth editing actions within the handwritten content CT1, this is because the user does not need to hesitate or make corrections but takes regular pauses to consult a given source. The user can thus handwrite relatively quickly from beginning to end with no or little human creation.

Accordingly, by taking into account handwriting features FT1 as previously described, it is possible to determine in an efficient, reliable and quick manner an originality score SC1 indicating a probability that a handwritten content is an original content generated by the user or a non-original content copied by the user.

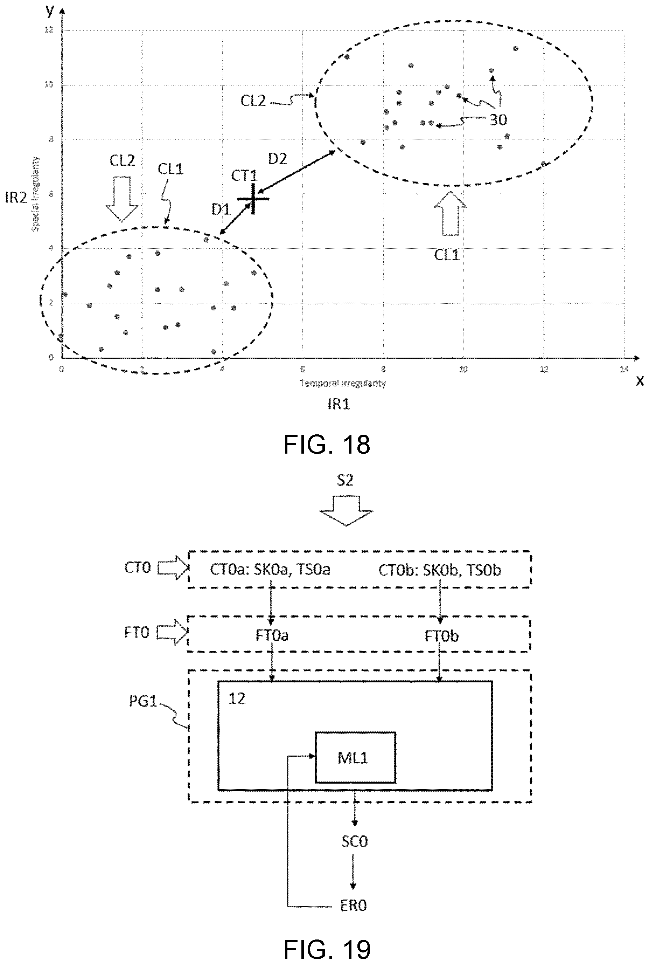

**Figure 18** is a graph illustrating the evolution of the temporal irregularity IR1 as a function of the spatial irregularity IR2 for different handwritten contents by way of examples. Each point 30 shown in figure 18 correspond to a respective handwritten content characterised by a first value of temporal irregularity IR1 and a second value of spatial irregularity IR2. The x axis represents temporal irregularity while the y axis represents Spatial irregularity.

A clustering arrangement of two clusters CL1 and CL2 of handwritten contents can be seen in figure 18. On the one hand, the handwritten contents within the cluster CL2 (lower left) have relatively low temporal and spatial irregularities IR1 and IR2, thereby indicating these contents as non-original contents generated by users (hand-writers) copying an external source. On the other hand, the handwritten contents within the cluster CL1 (upper right) have relatively high temporal and spatial irregularities IR1 and IR2, thereby indicating these contents as original contents generated by users (and-writers) without copying an external source, i.e. through a creative human generation process. As can be seen, these clusters CL1 and CL2 are clearly distinct and apart from each other, this showing that the temporal and spatial irregularities IR1 and IR2 are handwriting features that can be efficiently used to estimate an originality score SC1 of a given handwritten content.

In a particular example, in the determining step S6 (figure 5), the computing device DV1 determines the originality score SC1 of a given handwritten content CT1 based on distances D1 and D2 of the handwritten content CT1 with respect to the clusters CL1 and CL2, respectively. The closer the handwritten content CT1 is to the cluster CL1 (or CL2, respectively), the more likely the handwritten content CT1 is copied (or original, respectively).

In a particular example, the handwritten content CT1 is classified (S8, figure 5) as being a copied content (class CL2) if the distance D2 is below a first threshold value and if the distance D1 is above a second threshold value.

As already indicated, the computing device DV1 determines in step S6 (figure 5) the originality score SC1 indicating a probability that the handwritten content CT1 is an original content generated by the user UR1 or a non-original content copied by the user UR1, by using the handwriting features FT1 as input to one or more predictive models ML1 of a machine learning classifier 12 (figures 2 and 4).

In a particular example, the method implemented by the computing device DV1 as described above comprises training the one or more predictive models ML1 based on first handwritten samples CT0a assumed to be originally generated without copying and second handwritten samples CT0b assumed to be non-originally generated by copying (figures 4-5). Both handwritten samples CT0a and CT0b (also called handwritten examples) are assumed to be handwritten by humans. To achieve an efficient and accurate predictive model ML1, it is advisable to train this model with a large number of first and second handwritten samples CT0a and CT0b.

It has been observed that more accurate and reliable results can be achieved by training the predictive model(s) ML1 based on both types of handwritten samples, i.e. original content samples CT0a and copied content samples CT0b, thereby improving the capacity of the model(s) to distinguish between original and copied contents.

Variants are however possible where a single model ML1 is trained with only one among the original and non-original samples CT0a and CT0b (i.e. based only on original samples or based only on copied samples). In such variants, the computing device DV1 may classify a document as belonging to a single class (or cluster) or not, based on the training of the single model.

**Figure 19** shows a particular example where a single predictive model ML1 is trained based on first and second handwritten samples CT0a and CT0b to be capable of estimating an originality score SC1 in the determining step S6 (figure 5). This model ML1 can then be used to perform the determining step S6 as previously described.

In a particular example, the samples CT0 (comprising CT0a and CT0b) constitute a training dataset that is used to train the ML classifier 12. These training samples CT0 may each be labelled as either original content CT0a or copied content CT0b to allow distinguishing between the two types.

In a particular example illustrated in figure 19, the first training dataset CT0a defines strokes SK0a of digital ink, and associated timestamps TS0a, of the first handwritten samples (original) while the second training dataset CT0b defines strokes SK0b of digital ink, and associated timestamps TS0b, of the second handwritten samples (copied).

During the training step, the computing device DV1 may perform steps S2-S6 based on the training samples CT0 in an analogous manner to the method described above. In substance, the computing device DV1 may extract handwriting features FT0 from the training dataset CT0. In particular, the first handwriting features FT0a may be extracted from the first handwritten samples CT0a and the second handwriting features FT0b may be extracted from the second handwritten samples CT0b. Based on the first and second handwriting features FT0a and FT0b, the ML classifier 12 may then determine an originality score SC0 and compare the determined originality score SC0 with a reference value. Based on an error ER0 between the originality score SC0 and the reference value, the ML classifier ML1 may adapt (or configure) its predictive model ML1 to minimize the calculated error E0. This training step may be repeated iteratively to make the error ER0 converge to a minimum value. The configuration of the predictive model ML1 may include configuring weights or parameters of various nodes of an artificial neural network.

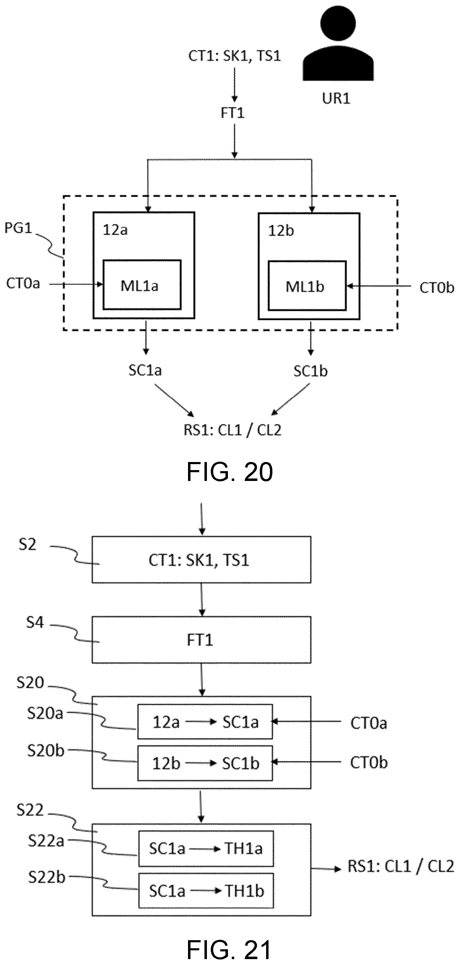

As shown in **figures 20-22** according to particular embodiments, it is possible to train and use two predictive models ML1a and ML1b to perform the determining step S6 (figure 5) of the method as previously described. To this end, the computing device DV1 may execute the computer program PG1 (figure 2).

More specifically, the computer program PG1 defines two predictive models ML1a and ML1b of two machine learning (ML) classifiers 12a and 12b, respectively. Each ML classifier 12a and 12b is configured to perform an estimation (or prediction) based respectively on the trained predictive model ML1a and ML1b. Each classifier 12a and 12b may comprise an artificial neural network configured according to its trained predictive model ML1a and ML1b to produce an estimation result based on an input.

It is assumed by way of an example that the content CT1 shown in figure 1, and associated temporal timestamps TS1, are obtained, and that handwriting features FT1 are extracted therefrom, by performing the steps S2-S4 as already described.

A determining step S20 is then performed in an analogous to step S4 (figure 5), with the difference that the two predictive models ML1a and ML1b are used instead of a single one. More specifically, the computing device DV1 determines (S20a, figure 21) a first originality score SC1a indicative of a probability that the handwritten content CT1 is an original content generated by the user UR1, by using the handwriting features FT1 as input to the first predictive model ML1a of the first machine learning classifier 12a. Likewise, the computing device DV1 determines (S20b, figure 21) a second originality score SC1b indicative of a probability that the handwritten content CT1 is a non-original content copied by the user UR1, by using the handwriting features FT1 as input to the second predictive model ML1b of the second machine learning classifier 12b.

The first and second predictive models ML1a and ML1b may be trained in an analogous manner as described earlier (figures 4-5 and 19), i.e. based respectively on first handwritten samples CT0a assumed to be originally generated without copying and based on second handwritten samples CT0b assumed to non-originally generated by copying.

It has been observed that even more accurate and reliable results can be achieved by determining two probability scores, namely SC1a and SC1b, to estimate whether the handwritten content CT1 is respectively an original content and a non-original content. In practice, the user UR1 may voluntarily alter his/her handwriting in an attempt to elude or thwart detection of a non-original content. While a user UR1 may succeed in obtaining a second originality score SC1b indicating that the handwritten content CT1 is not a copied content, he/she is likely to fail to obtain a first originality score SC1a indicating that the handwritten content CT1 is an original content, that is, a content generated while handwriting without copying. It is likely that the altered handwriting adopted by the user UR1 will differ to, some extent at least, from the usual handwriting patterns used by legitimate users (or hand-writers) who generate handwritten contents during handwriting without copying an external source. By training appropriately the first model ML1a, the first classifier 12a will thus be capable of detecting that the handwritten content CT1 is not an original content, thereby rendering the method more robust to eluding techniques.

In a particular example, the computing device DV1 performs a classifying step S22 in an analogous manner to the classifying step S8 described earlier (figures 20-21), i.e. by classifying the handwritten content CT1 as an original content generated by the user (class CL1) or a non-original content copied by the user (class CL2), based on the first and second originality scores SC1a and SC1b.

In a particular example, the computing device DV1 classifies the handwritten content CT1 as either an original content (class CL1) or a non-original content (class CL2) based on comparing the first and second originality score SC1a and SC1b with respective reference values (or thresholds) TH1a and TH1b. The computing device DV1 may check whether the first and second originality scores SC1a and SC1b meet respective conditions with respect to TH1a and TH1b. For instance, if the first originality score SC1a meets a first condition with respect to the first reference value TH1 and if the second probability score SC1b meets a second condition with respect to the second reference value TH2, then the handwritten content CT1 is classified as an original content (or a non-original content, depending on how the conditions are configured).

In a particular example, if at least one of the above-mentioned first and second condition is not met, it is recognised that at least part of the handwritten content CT1 is a non-original (or copied) content. In other words, the class CL2 (non-original) is attributed to the handwritten content CT1, or to at least part of it.

In a particular example, if the handwritten content cannot be recognised as being either an original content or a non-original content (e.g. with a sufficiently high or low probabilities according to the probability scores SC1a and SC1b), then it is detected that at least part of the handwritten content CT1 is non-original. In this case, the computing device DV1 may for instance partition the handwritten content CT1 into a plurality of content portions. e.g. paragraphs or sentences, and the method as described above is repeated to analyse the portions separately (or at least one portion thereof). It can thus be advantageously distinguished original and non-original parts within a same handwritten content.

In a particular example, the method implemented by the computing device DV1 as described above comprises training the predictive models ML1a and ML1b (figures 2 and 20-21) based on first handwritten samples CT0a assumed to be originally generated without copying and second handwritten samples CT0b assumed to be non-originally generated by copying. Both handwritten samples CT0a and CT0b (also called handwritten examples) are assumed to be handwritten by humans. To achieve efficient and accurate predictive models ML1a and ML1b, it is advisable to train this model with a large number of first and second handwritten samples CT0a and CT0b.

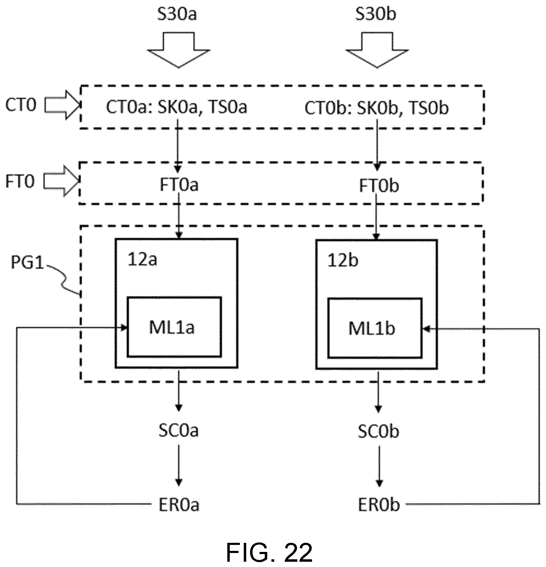

**Figure 22** shows a particular example where the two predictive models ML1a and ML1b are trained based on first and second handwritten samples CT0a and CT0b to be capable of estimating the originality scores SC1a and SC1b in the determining step S20 (figure 21). These models ML1a and ML1b can then be used to perform the determining step S20 as previously described.

In a particular example, the samples CT0 (comprising CT0a and CT0b) constitute a training dataset that is used to train the ML classifiers 12a and 12b. These training samples CT0 may each be labelled as either original content CT0a or copied content CT0b to allow distinguishing between the two types.

In a particular example illustrated in figure 22, the first training dataset CT0a defines strokes SK0a of digital ink, and associated timestamps TS0a, of the first handwritten samples (original) while the second training dataset CT0b defines strokes SK0b of digital ink, and associated timestamps TS0b, of the second handwritten samples (copied).

During the training step, the computing device DV1 may perform steps S2, S4 and S20 based on the training samples CT0 in an analogous manner to the method described above. In substance, the computing device DV1 may extract handwriting features FT0 from the training dataset CT0. In particular, the first handwriting features FT0a may be extracted from the first handwritten samples CT0a and the second handwriting features FT0b may be extracted from the second handwritten samples CT0b. Based on the first handwriting features FT0a, the ML classifier 12a may then determine an originality score SC0a and compare the determined originality score SC0a with a first reference value. Likewise, based on the second handwriting features FT0b, the ML classifier 12b may determine an originality score SC0b and compare the determined originality score SC0b with a second reference value. Based on an error ER0a between the originality score SC0a and the first reference value (and based respectively on an error ER0b between the originality score SC0b and the second reference value), the ML classifier ML1a (respectively ML1b) may configure its predictive model ML1a (respectively ML1b) to minimize the calculated error E0a (respectively E0b). This training step may be repeated iteratively to make the errors ER0a and ER0b converge to minimum values. The configuration of the predictive models ML1a and ML1b may include configuring weights or parameters of various nodes of artificial neural networks.

Even more reliable and accurate results can be achieved by training two models ML1 with both types (original and copied) of samples as a double verification can thus be made based on the two trained models (e.g. by performing a double comparison of the two originality scores SC1a and SC1b with respective thresholds). This allows to provide an even more robust system against intentional efforts to thwart the handwriting analysis.

It should be noted that the training of the single predictive model ML1 in figure 19, or of the two predictive models ML1a and ML1b in figure 22, can be performed in various manners, for instance in a supervised or unsupervised manner. In a first example, it is possible to configure the training by specifying which handwriting features FT1 of the handwritten content should be analysed and how. In an unsupervised variant, it is possible to configure the training to have the one or more ML classifiers ML1 determine which handwriting features FT1 of the handwritten content should be analysed and how.

It is noted that the present embodiments do not compare the content of the text with known texts to identify plagiarism. However, the present embodiments may also be used in conjunction with known systems for plagiarism detection that are based on comparison of content to identify matches between the handwritten text and existing texts.

While not explicitly described, the present embodiments may be employed in any combination or sub-combination thereof. This disclosure having been described in particular embodiments, it is clear that it is susceptible to numerous modifications and embodiments are possible within the scope defined by the scope of the following claims.

## Claims

1. A computer-implemented method for analysing a content (CT1) handwritten by a user (UR1), comprising:
- obtaining (S2) the handwritten content, comprising strokes (SK1) of digital ink, and temporal timestamps (TS1) associated with said strokes;
- extracting (S4) handwriting features (FT1) based on the strokes and the associated temporal timestamps; and
- determining (S6; S20) an originality score (SC1) indicating a probability that the handwritten content is an original content generated by the user (UR1) or a non-original content copied by the user (UR1), by using the handwriting features (FT1) as input to at least one predictive model (ML1; ML1a-ML1b) of a machine learning classifier (12: 12a-12b), said at least one predictive model being trained based on first handwritten samples (CT0a) assumed to be originally generated without copying and second handwritten samples (CT0b) assumed to be non-originally generated by copying.

2. Method according to claim 1, wherein the handwritten content comprises handwritten text, and wherein the first and second handwritten samples comprise handwritten text.

3. Method of claim 1 or 2, wherein said obtaining the handwritten text content and the temporal timestamps comprises at least one of:
- detecting input of said handwritten content over time using an input surface and generating the temporal timestamps based on said detecting; and
- retrieving from a data record the handwritten content and the temporal timestamps.

4. Method according to any one of the preceding claims, wherein the timestamps define an input time at which the respective strokes were input.

5. Method of any one of the preceding claims, wherein the extracted handwriting features define a handwriting process according to which the strokes were handwritten by the user over space and time within an input area.

6. Method according to claim 5, wherein the extracted handwriting features comprises at least one of the following temporal features indicative of a temporal distribution of the handwritten content:
- a speed indicator representative of a speed of handwriting the strokes during the handwriting process;
- a pause indicator representative of pauses made during the handwriting process; and
- a rhythm indicator representative of a rhythm of handwriting the strokes during the handwriting process.

7. Method according to claim 5 or 6, wherein the extracted handwriting features comprise temporal features defining a trajectory along which the strokes were successively handwritten by the user within the input area.

8. Method according to any one of the preceding claims, wherein the method comprises classifying, based on the originality score, the handwritten content as an original content generated by the user or a non-original content copied by the user.

9. Method according to any one of the preceding claims, wherein the method comprises:
- training said at least one predictive model based on the first samples assumed to be originally generated without copying and the second samples assumed to be non-originally generated by copying.

10. Method according to any one of the preceding claims, wherein said determining the originality score comprises:
- determining a first originality score indicative of a probability that the handwritten content is an original content generated by the user, by using as input the handwriting features to a first predictive model of a first machine learning classifier, said first predictive model being trained based on said first handwritten samples; and
- determining a second originality score indicative of a probability that the handwritten content is a non-original content copied by the user, by using as input the handwriting features to a second predictive model of a second machine learning classifier, said second predictive model being trained based on said second handwritten samples;
wherein the method comprises classifying the handwritten content as an original content generated by the user or a non-original content copied by the user based on the first and second originality scores.

11. Method according to claim 10, wherein said classifying the handwritten text content comprises:
- comparing respectively the first and second probability scores with first and second reference values;
- classifying the handwritten content as an original content if the first probability score meets a first condition with respect to the first reference value and if the second probability score meets a second condition with respect to the second reference value.

12. Method according to claim 11, wherein said classifying comprises:
- if at least one of the first and second condition is not met, recognizing that at least part of the handwritten content is a non-original content.

13. Method according to any one of the claims 10 to 12, wherein the method comprises:
- training the first predictive model based on the first handwritten samples assumed to be originally generated without copying; and
- training the second predictive model based on the second handwritten samples assumed to be non-originally generated by copying.

14. A computer program including instructions for executing the steps of a method for estimating an original character of a handwritten text content according to any one of claims 1 to 12 when said program is executed by a computer.

15. A computing device for analysing content handwritten by a user, comprising:
- an obtaining module (MD2) for obtaining the handwritten content, comprising strokes of digital ink, and temporal timestamps associated with said strokes;
- an extracting module (MD4) for extracting handwriting features based on the strokes and the associated temporal timestamps; and
- a determining module (MD6) for determining an originality score indicating a probability that the handwritten content is an original content generated by the user or a non-original content copied by the user, by using the handwriting features as input to at least one predictive model of a machine learning classifier, said at least one predictive model being trained based on first handwritten samples assumed to be originally generated without copying and second handwritten samples assumed to be non-originally generated by copying.
